# EUROPÄISCHE PATENTSCHRIFT

(11) **EP 0 456 111 B1**
(45) Veröffentlichungstag und Bekanntmachung des Hinweises auf die Patenterteilung: **12.07.1995**
(21) Anmeldenummer: 91107089.4
(22) Anmeldetag: 02.05.1991
(51) Int. Cl.: B05C 11/02, B05B 7/00, D06B 19/00

(54) **Verfahren zum Auftragen einer geschäumten fliessfähigen Beschichtungsmasse**
Process for applying a foamed liquid product
Procédé pour appliquer un revêtement liquide moussé

(30) Priorität: 10.05.1990 DE 4015017
(43) Veröffentlichungstag der Anmeldung: 13.11.1991
(73) Patentinhaber: HÜLS AKTIENGESELLSCHAFT, 45764 Marl (DE)
(72) Erfinder: Cisewski, Werner, W-4270 Dorsten 11 (DE); Schatz, Gerhard, W-4408 Dülmen (DE); Zawada, Hans-Günter, W-4370 Marl (DE)

(56) Entgegenhaltungen:
- DE-A- 3 108 963
- TEXTIL PRAXIS INTERNATIONAL Bd. 38, Nr. 6, Juni 1983, LEINFELDEN-ECHTERDINGENSeiten 576 - 582; H.PLEVA: 'Berührungslose Auftragsmessung von Feuchtigkeit,Farbauftrag und Schäumen Berührungslose Messung der Restfeuchte in Textilenoder ähnlichen Warenbahn beliebiger Dicke' 3.1.5. Schaumauftrag und Vorstrichvon Teppichen
- PATENT ABSTRACTS OF JAPAN vol. 13, no. 420 (M-872)19. September 1989
- PATENT ABSTRACTS OF JAPAN vol. 15, no. 403 (C-875)15. Oktober 1991

## Beschreibung

Die Erfindung betrifft ein Verfahren zum Auftragen einer geschäumten fließfähigen Beschichtungsmasse auf ein bahnartiges Flächengebilde gemäß dem Oberbegriff des Anspruchs 1.

Die Erfindung bezweckt, beschichtete Flächengebilde in gleichbleibender Qualität auf wirtschaftliche Weise herzustellen.

Auf textile bahnartige Flächengebilde (z. B. einen Fußbodenbelag) oder auf Papierbahnen (z. B. Tapeten) wird in vielen Fällen eine Schicht aus einer geschäumten fließfähigen Beschichtungsmasse aufgetragen und anschließend verfestigt. Bei Fußbodenbelägen handelt es sich in der Regel um die Rückenbeschichtung; bei Tapeten kann es sich um die Rückenbeschichtung oder (z. B. bei Strukturtapeten) um die Beschichtung auf der sichtbaren Seite handeln. Als Beschichtungsmasse wird beispielsweise eine geschäumte Dispersion aus unterschiedlichen Rohstoffen eingesetzt. Das zu beschichtende Flächengebilde wird im folgenden Trägerbahn genannt.

Verfahren zum Auftragen einer geschäumten fließfähigen Beschichtungsmasse sind bekannt. Die Trägerbahn wird z. B. über Umlenkeinrichtungen und über einen horizontalen Tisch gezogen. Über dem Tisch befindet sich eine Streichvorrichtung, z. B. eine Rakel oder eine Walze, die glatt oder geprägt sein kann. Der Tisch oder die Streichvorrichtung sind von Hand in der Höhe verstellbar.

Die geschäumte fließfähige Beschichtungsmasse wird - in Laufrichtung der Trägerbahn gesehen - vor der Streichvorrichtung aus einer oder mehreren feststehenden oder traversierenden Leitungen, z. B. Schläuchen, aufgebracht.

Die Beschichtungsmasse wird in bekannter Weise in einer Schäumvorrichtung (Mischvorrichtung) geschäumt und zu den Leitungen vor der Streichvorrichtung gedrückt. Hinter der Streichvorrichtung wird die beschichtete Trägerbahn in der Regel z. B. in einem Trockner heiß behandelt, wobei sich die geschäumte Schicht verfestigt.

Der Strom der Beschichtungsmasse ist im allgemeinen an die Geschwindigkeit der Trägerbahn gekoppelt.

Die Streichvorrichtung hat einen - von Hand verstellbaren - vorgegebenen Abstand von der oben liegenden Seite der Trägerbahn; die Breite dieses Spaltes bestimmt die Dicke der aufgetragenen Schicht. Die Spaltbreite schwankt erfahrungsgemäß, weil die Dicke der Trägerbahn über eine Länge von wenigen Metern um Millimeter-Bruchteile schwankt. Diese Schwankungen können aus der Fertigung der Trägerbahn oder aus ihrer Lagerung vor dem Beschichten herrühren. Um das Flächengewicht der aufgetragenen Beschichtung konstant zu halten, wird die Spaltbreite bei zunehmender (abnehmender) Schaumhöhe vor der Streichvorrichtung vergrößert (verkleinert). Die Schaumhöhe wird visuell beobachtet, und die Streichvorrichtung wird von Hand in der Höhe verstellt. Damit läßt sich jedoch die Schwankung der Dicke der unbeschichteten Trägerbahn nur unvollkommen ausgleichen; erfahrungsgemäß schwankt das nach diesem bekannten Verfahren erhaltene Flächengewicht der Beschichtung merklich. Die Spaltbreite läßt sich trotz vorher durchgeführter Berechnung nicht hinreichend genau ermitteln; deshalb ist sie wiederholt von Hand nachzustellen, was erfahrungsgemäß wenig präzise ist.

Weiter ist bekannt (Textil Praxis Internat. 38 (1983), S. 579 - 582, speziell Abschnitt 3.1.5), die Menge des Schaumauftrages oder Vorstrichs bei Teppichen durch Absorption von Mikrowellen im Durchstrahlungsverfahren berührungslos zu messen. Die Meßvorrichtung ist dabei hinter der als Auftragsvorrichtung benutzten Rakel angebracht. Bei diesem Verfahren wird der Wasser- oder Feuchtegehalt der zu überwachenden Warenbahn gemessen. Hieraus kann man unter speziellen Voraussetzungen auf die Dicke der aufgetragenen Schicht schließen.

Falls in den Lieferbedingungen für die beschichtete Trägerbahn ein Mindestwert für das Flächengewicht der Beschichtung vorgegeben ist, muß man das mittlere Flächengewicht der Beschichtung deutlich über diesen Wert anheben, damit auch an den dünner beschichteten Stellen der Trägerbahn das Flächengewicht der Beschichtung hinreichend groß ist; dieses Verfahren ist unwirtschaftlich.

Bei deutlich schwankendem Flächengewicht der Beschichtung schwankt auch die Dicke der beschichteten Trägerbahn merklich; diese Dickenunterschiede sind sichtbar und werden beanstandet, wenn zwei beschichtete Trägerbahnen nebeneinander verlegt werden. Ein zu stark schwankendes Flächengewicht der Beschichtung ist ein Qualitätsmangel, auch dann, wenn der vorgeschriebene Mindestwert des Flächengewichtes nicht unterschritten wird.

Damit stellt sich die Aufgabe, ein Verfahren zum Auftragen einer geschäumten fließfähigen Beschichtungsmasse zu finden, mit dem man die Schwankungen sowohl des Flächengewichtes der Beschichtung als auch die Dicke der Beschichtung kleiner halten kann als nach dem bisher bekannten Verfahren.

Diese Aufgabe wird erfindungsgemäß gelöst durch ein Verfahren gemäß Anspruch 1, bei dem die Höhe der Schaumoberseite durch ein berührungslos arbeitendes Entfernungsmeßverfahren nach dem Remissionsprinzip mittels einer räumlich fest angeordneten Sende- und Empfangseinrichtung an einer Stelle gemessen wird, an der sich die Höhe der im wesentlichen horizontal laufenden Trägerbahn nicht ändert, und dieses Meßsignal zum Regeln der Dicke der Schaumschicht hinter der Streichvorrichtung verwendet wird. Das berührungslos arbeitende Meßverfahren ist eines der bekannten Ultraschall- oder optischen Entfernungsmeßverfahren. Bei Ultraschall wird bevorzugt die Laufzeit von Ultraschall-Impulsen gemessen und daraus der Abstand zwischen Sender/Empfänger und der remittierenden Fläche berechnet. Bei den bekannten optischen Meßverfahren wird Laserstrahlung oder elektromagnetische Strahlung im sichtbaren oder unsichtbaren Spektralbereich verwendet.

Die Spaltbreite unter der Streichvorrichtung wird innerhalb eines vorgegebenen Regelbereiches automatisch geregelt, und zwar wird die Spaltbreite vergrößert (verkleinert), wenn die Schaumhöhe größer (kleiner) wird. Sobald die Schaumhöhe außerhalb des Regelbereiches liegt, wird ein Alarmsignal ausgelöst.

Eine weitere Möglichkeit zum Regeln der Dicke der Schaumschicht hinter der Streichvorrichtung besteht darin, die Meßwerte für die Schaumhöhe als weiteren Sollwert auf die Förderleistung des die geschäumte Beschichtungsmasse liefernden Mischapparates aufzuschalten. Diese Förderleistung ist abhängig von der Breite der zu beschichtenden Trägerbahn, von der vorgegebenen Dicke und dem vorgegebenen Flächengewicht der Schaumschicht sowie von der Geschwindigkeit der Trägerbahn.

Bei traversierender Auftragsvorrichtung wird während jeder Periode der Bewegung die Schaumhöhe zweimal gemessen, und zwar jeweils in einem zeitlichen Abstand von 0,5 bis 20 Sekunden, nachdem die Auftragsvorrichtung an der berührungslos arbeitende Entfernungsmeßeinrichtung vorbeigegangen ist. Jede Messung wird bevorzugt durch die traversierende Auftragsvorrichtung mittels eines Näherungsschalters ausgelöst.

Wenn die geschäumte fließfähige Beschichtungsmasse mittels einer ortsfesten Vorrichtung aufgetragen wird, wird die Schichthöhe alle 0,5 bis 5 Sekunden gemessen. Es ist im allgemeinen hinreichend, die Schaumhöhe an nur einer Stelle - bevorzugt im mittleren Bereich der Trägerbahn - zu messen, auch wenn die Trägerbahn mehrere Meter breit ist.

Es ist zweckmäßig, mehrere (z. B. bis zu 20) aufeinanderfolgende Meßwerte automatisch zu speichern, wobei die gespeicherten Meßwerte jeweils blockweise im Speicherstapel um ein Register verschoben werden, damit der erste Speicherplatz für den anstehenden jüngsten Meßwert frei wird; der jeweils älteste Meßwert geht verloren. Jeweils 2 bis 20 aufeinanderfolgende Meßwerte der Schaumhöhe werden auf Plausibilität bewertet, d. h. ein einzelner Meßwert der Schaumhöhe, der um weniger als ± 2 mm von dem vorhergehenden Meßwert abweicht, wird gespeichert und als Meßsignal an den Regler weitergegeben. Ein einzelner Meßwert, der um mehr als ± 2 mm vom vorhergehenden Meßwert abweicht, wird als solcher gespeichert, jedoch bezüglich der Regelung durch den vorhergehenden Wert ersetzt. Wenn mindestens zwei aufeinanderfolgende Werte um mehr als ± 2 mm von dem vorhergehenden Wert abweichen, der noch im Trend gelegen hat, werden diese Werte an den Regler weitergegeben.

Für die Regelung wird also im wesentlichen der Trend aus mehreren Werten benutzt. Einzelne vom Trend abweichende Werte bleiben zunächst oder dauernd unberücksichtigt und werden nur gespeichert; mehrere aufeinanderfolgende vom Trend abweichende Werte werden als Änderung des Trends betrachtet und an den Regler weitergegeben. Damit werden Fehlremissionen ausgefiltert; die Fehlremissionen können eine Vielzahl verschiedener Ursachen haben.

Sobald mehrere - bevorzugt mindestens zwei - aufeinanderfolgende Meßwerte außerhalb des Regelbereiches liegen, wird ein Alarmsignal ausgelöst, das optisch und/oder akustisch angezeigt wird.

Die Lage und die Breite des Regelbereiches sind einstellbar. Die Lage richtet sich nach den speziellen Bedingungen des benutzten Auftragsverfahrens und nach der benutzten Vorrichtung. Die Breite des Regelbereiches beträgt beispielsweise ± 10 mm beim Beschichten eines Fußbodenbelages und ± 5 mm beim Beschichten einer Tapete.

Zum Beschichten eines Fußbodenbelages wird die geschäumte fließfähige Beschichtungsmasse im allgemeinen mit einer traversierenden Vorrichtung aufgetragen. Die Ultraschall-Meßeinrichtung ist in einem Abstand von 10 - 30 cm oberhalb der Schaumoberfläche und vor der Streichvorrichtung bevorzugt etwa in der Mitte der Trägerbahn angebracht. Die Schaumhöhe wird bevorzugt nach jeweils 2 - 8 Sekunden nach jedem Vorbeigehen der traversierenden Auftragsvorrichtung an der Ultraschall-Meßeinrichtung gemessen. Bevorzugt 2 - 10 aufeinanderfolgende Meßwerte der Schaumhöhe werden gespeichert und auf Plausibilität bewertet.

Jeder als plausibel bewerteter Meßwert wird als Meßsignal an einen oder zwei Regler weitergegeben und gelangt unter der Einwirkung der Regelcharakteristik des Reglers als Regelsignal auf einen Stellmotor, der - bevorzugt über ein Untersetzungsgetriebe - die Streichvorrichtung in der Höhe verstellt oder der die Förderleistung des Mischapparates verändert.

Beim Beschichten eines Fußbodenbelages beträgt die kleinstmögliche Änderung der Spaltbreite beispielsweise 0,1 mm oder weniger. Der Regelbereich für die Schaumhöhe vor der Streichvorrichtung hat eine Breite von bevorzugt ± 10 mm um den Sollwert.

Sobald bevorzugt mindestens Zwei aufeinanderfolgende Meßwerte für die Schaumhöhe außerhalb des Regelbereiches liegen, wird ein Alarmsignal ausgelöst, das optisch und/oder akustisch angezeigt wird.

Für das erfindungsgemäße Verfahren ist grundsätzlich jede bekannte berührungslos arbeitende Entfernungsmeßeinrichtung geeignet. Bevorzugt werden vollgekapselte Ultraschall-Sender und -Empfänger eingesetzt. Die Ultraschall-Frequenz kann z. B. 215 kHz betragen und die Senderleistung 500 mW. Die Richtung der Ultraschall-Strahlung steht bevorzugt im wesentlichen senkrecht auf der Schaumoberfläche.

Überraschenderweise ergibt sich bei Anwendung des erfindungsgemäßen Verfahrens die erstrebte gleichmäßigere Dicke der Beschichtung, auch dann, wenn die Meßgröße für die Regelung die periodisch schwankende Höhe des unter der Entfernungsmeßeinrichtung auseinanderfließenden Schaumes ist.

Bei einer Variante des erfindungsgemäßen Verfahrens wird die Höhe der Schaumschicht hinter der Streichvorrichtung und die Höhe der Oberseite der unbeschichteten Trägerbahn kurz vor der Stelle, an der die geschäumte Beschichtungsmasse aufgetragen wird, durch ein berührungslos - oder vor der Streichvorrichtung durch ein mit Berührung der Oberseite - arbeitendes Entfernungsmeßverfahren gemessen; diese Meßwerte werden über einen Differenzierer als weiterer Sollwert auf die Regelung der Spaltbreite unter der Streichvorrichtung aufgeschaltet.

Das erfindungsgemäße Verfahren hat folgende Vorteile:
- Die Beschichtungsanlage läuft im wesentlichen vollautomatisch. Die Sichtprüfung der Schaumhöhe vor der Streichvorrichtung und die diskontinuierliche manuelle Änderung der Spaltbreite unter der Streichvorrichtung entfallen vollständig, nachdem die Vorrichtung einmal von Hand eingestellt worden ist.
- Die Dicke der Beschichtung schwankt deutlich weniger als beim Verstellen der Spaltbreite von Hand, damit ist die angestrebte Verbesserung der Qualität erreicht.
- Schwankungen der Dicke der Trägerbahn (z. B. bedingt durch deren Lagerung) haben praktisch keinen Einfluß mehr auf die Dicke der Beschichtung. Auch beim Übergang von einer Trägerbahn auf eine Trägerbahn mit anderer Dicke wird die Höhe der Streichvorrichtung automatisch angepaßt.
- Der Sollwert des Flächengewichtes der Beschichtung kann näher am vorgeschriebenen Mindestwert liegen als beim Verstellen der Spaltbreite von Hand; damit wird das Beschichtungsverfahren wirtschaftlicher.
- Die Schaumhöhe vor der Streichvorrichtung läßt sich in engen Grenzen halten und den Anforderungen entsprechend einstellen.
- Die in der Beschichtungsanlage maximal mögliche Geschwindigkeit der Trägerbahn läßt sich ohne weiteres erreichen, und die Beschichtungsanlage kann bei maximaler Geschwindigkeit stabil betrieben werden.
- Wegen der gieichmäßigeren Dicke der Beschichtung machen sich Höhenunterschiede beim Verlegen von beschichteten Bahnen nebeneinander praktisch nicht mehr bemerkbar.
- Unterbrechungen des Stromes der geschäumten Beschichtungsmasse und der Ausfall der Traversierbewegung der Auftragsvorrichtung werden innerhalb weniger Sekunden gemeldet.

Das erfindungsgemäße Verfahren wird an folgendem Beispiel näher erläutert.

### Erfindungsgemäßes Beispiel

Auf einer bekannten Anlage wird ein ca. 5 m breiter Fußbodenbelag mit einer geschäumten Rückenschicht versehen. Die Trägerbahn hat eine Geschwindigkeit von 8 m/min. Die ungeschäumte Beschichtungsmasse wird mit 27 kg/min in die Schäumvorrichtung eingespeist, dort auf eine Dichte von 230 g/Liter mittels eingeblasener Luft verschäumt und durch den Auftragsschlauch gedrückt, der vor der Streichvorrichtung mit 8 Hüben pro Minute über die volle Breite der Trägerbahn traversiert. Die Dichte des Schaumes schwankt im üblichen Rahmen.

Die Streichvorrichtung besteht aus einer Rakel, deren Unterkante einen Sollabstand von 2,9 mm von der oben liegenden Seite der Trägerbahn hat. Vor der Rakel bildet sich eine Schaumschicht von etwa 150 mm Höhe aus. Die Rakel ist von Hand höhenverstellbar.

Etwa in der Mitte der Trägerbahn ist eine Ultraschall-Meßeinrichtung angebracht, deren Sender und Empfänger sich ca. 23 cm oberhalb der Schaumoberfläche befinden. Die Ultraschall-Frequenz beträgt 215 kHz.

Die Messung wird 3,5 Sekunden nach jedem Vorbeigehen der traversierenden Auftragsvorrichtung mittels eines Näherungsschalters ausgelöst. Innerhalb weniger Millisekunden wird ein Meßwert für die Schaumhöhe ermittelt, angezeigt, in einem Speicher mit 15 Speicherplätzen gespeichert und nach der Bewertung als Meßsignal an den Regler gegeben. Die Höhe der Rakel wird mit einem Stellmotor verstellt, der das Regelsignal von der Regeleinrichtung erhält.

Die Höhe der Rakel wird nach dem erfindungsgemäßen Verfahren geregelt. Bei jedem Ansprechen des Stellmotors wird die Rakel um ca. 0,1 mm oder weniger nach oben oder unten verstellt. Für dieses Beispiel wird außerdem die gemessene Schaumhöhe auf einem Schreiber registriert.

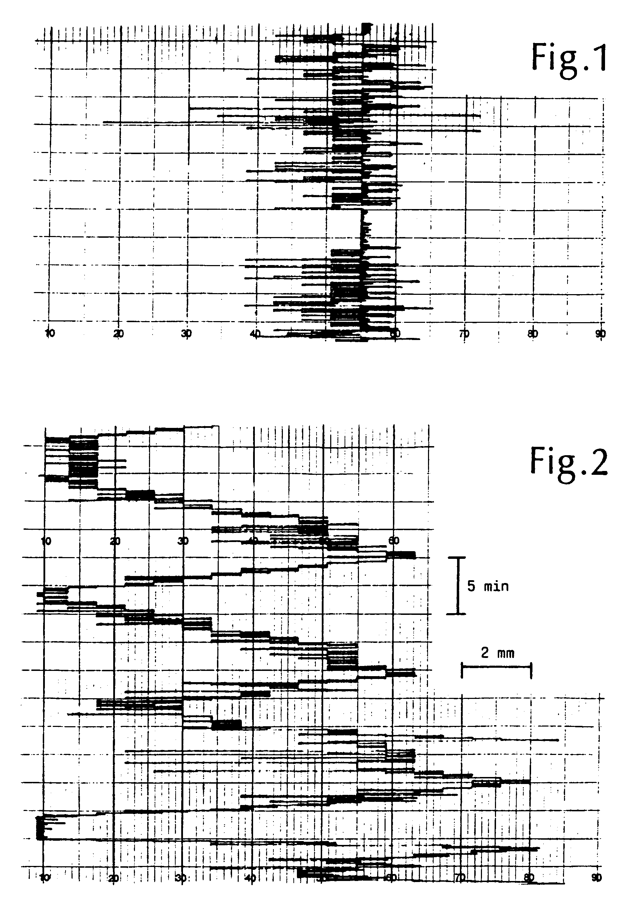

Die Änderung der Schaumhöhe ist für eine Betriebszeit von ca. 0,3 Stunden in Figur 1 dargestellt. Die Höhe schwankt ständig mit einer Spannweite von ca. 4 mm.

Dieser Schwankung der Schaumhöhe entspricht eine Schwankung der Schichtdicke hinter der Rakel mit einer Spannweite von ca. 0,2 mm.

### Vergleichsbeispiel

Die im erfindungsgemäßen Beispiel benutzte Regeleinrichtung wird abgeschaltet; die Schaumhöhe wird jedoch wiederum mit der Ultraschall-Meßeinrichtung gemessen und auf dem Schreiber registriert.

Die Schaumhöhe wird nun - wie vorher üblich - visuell beurteilt, und die Streichvorrichtung wird von Hand in der Höhe verstellt.

Die Änderung der Schaumhöhe ist für eine Betriebszeit von ca. 0,5 Stunden in Figur 2 dargestellt. Die Höhe schwankt ständig mit einer Spannweite von ca. 20 mm. Um die Schaumhöhe in diesem Bereich zu halten, muß eine Schwankung der Schichtdicke hinter der Rakel mit einer Spannweite von mindestens 0,6 mm in Kauf genommen werden, also mindestens die dreifache Spannweite des erfindungsgemäßen Beispiels.

## Patentansprüche

1. Verfahren zum Auftragen einer geschäumten fließfähigen Beschichtungsmasse auf eine im wesentlichen horizontal laufende Trägerbahn, bei dem die Beschichtungsmasse in einer Mischvorrichtung hergestellt und mittels einer Auftragsvorrichtung vor einer Streichvorrichtung aufgetragen wird und die Dicke der Schaumschicht hinter der Streichvorrichtung veränderbar ist, wobei die Höhe der Schaumschicht durch ein berührungslos arbeitendes Verfahren gemessen und das Meßsignal zum Regeln der Dicke der Schaumschicht hinter der Streichvorrichtung verwendet wird, gekennzeichnet durch
- Messen der Höhe der Schaumoberseite durch ein Entfernungsmeßverfahren nach dem Remissionsprinzip mittels einer oberhalb der Trägerbahn angeordneten Sende- und Empfangseinrichtung an einer Stelle, an der sich die Höhe der Trägerbahn nicht ändert.

2. Verfahren nach Anspruch 1, gekennzeichnet durch
- Messen der Höhe der Schaumoberseite durch ein Ultraschall- oder ein optisches Entfernungsmeßverfahren.

3. Verfahren nach den Ansprüchen 1 und 2, gekennzeichnet durch
- Messen der Höhe der Schaumoberseite über die Laufzeit einer Ultraschall-Strahlung oder durch ein optisches Entfernungsmeßverfahren mittels Laserstrahlung oder elektromagnetischer Strahlung im sichtbaren oder unsichtbaren Spektralbereich, wobei die Strahlung von einer vor und/oder hinter der Streichvorrichtung angeordneten Sende- und Empfangseinrichtung gesendet und empfangen wird.

4. Verfahren nach den Ansprüchen 1 bis 3, gekennzeichnet durch
- Messen der Höhe der Schaumoberseite durch ein berührungsloses Entfernungsmeßverfahren,
- automatisches Bewerten von aufeinanderfolgenden Meßwerten auf Plausibilität, und
- Weitergeben der bewerteten Meßsignale an einen oder zwei Regler zwecks Regeln der Dicke der Schaumschicht hinter der Streichvorrichtung.

5. Verfahren nach den Ansprüchen 1 bis 4, gekennzeichnet durch
- Regeln der Dicke der Schaumschicht hinter der Streichvorrichtung durch automatisches Regeln der Spaltbreite unter der Streichvorrichtung innerhalb eines vorgegebenen Regelbereiches in Abhängigkeit von der Schaumhöhe vor der Streichvorrichtung,
- oder Regeln der Dicke der Schaumschicht hinter der Streichvorrichtung durch Aufschalten des Meßwertes für die Schaumhöhe als weiteren Sollwert auf die Förderleistung des die geschäumte Beschichtungsmasse liefernden Mischapparates.

6. Verfahren nach den Ansprüchen 1 bis 5, gekennzeichnet durch
- Auslösen eines Alarmsignals, sobald die Schaumhöhe außerhalb ihres vorgegebenen Sollbereiches liegt.

7. Verfahren nach den Ansprüchen 1 bis 6, gekennzeichnet durch
- Auftragen der Beschichtungsmasse mittels einer traversierenden oder einer ortsfesten Vorrichtung, und
- Messen der Schaumhöhe vor der Streichvorrichtung in einem zeitlichen Abstand von 0,5 - 20 Sekunden, nachdem die traversierende Auftragsvorrichtung an der Entfernungsmeßeinrichtung vorbeigegangen ist, oder
- Messen der Schaumhöhe vor der Streichvorrichtung mit einer Häufigkeit von 12 bis 120 Mal pro Minute bei einer ortsfesten Auftragsvorrichtung.

8. Verfahren nach den Ansprüchen 1 bis 7, gekennzeichnet durch
- automatisches Bewerten von 2 - 20 aufeinanderfolgenden gespeicherten Meßwerten der Schaumhöhe auf Plausibilität, und
- Auslösen eines Alarmsignals, sobald mindestens zwei aufeinanderfolgende Meßwerte außerhalb des vorgegebenen Regelbereiches der Schaumhöhe liegen.

9. Verfahren nach den Ansprüchen 1 bis 8, wobei die Trägerbahn ein textiler Fußbodenbelag ist, gekennzeichnet durch
- Messen der Schaumhöhe der Beschichtungsmasse vor der Streichvorrichtung über die Laufzeit eines remittierten Ultraschall-Signals mittels einer berührungslos arbeitenden Ultraschall-Meßeinrichtung,
- die 10 - 30 cm oberhalb der Schaumoberseite angebracht ist,
- in einem zeitlichen Abstand von jeweils 2 - 8 Sekunden nach jedem Vorbeigehen der traversierenden Auftragsvorrichtung an der Ultraschall-Meßeinrichtung, oder mit einer Häufigkeit von 12 bis 120 Mal pro Minute bei einer ortsfesten Auftragsvorrichtung,
- automatisches Bewerten von 2 - 10 aufeinanderfolgenden gespeicherten Meßwerten der Schaumhöhe auf Plausibilität,
- Weitergeben der bewerteten Meßsignale an einen Regler, wobei
- der Regelbereich für die Schaumhöhe eine Breite von bevorzugt ± 10 mm um den Sollwert hat, und
- automatisches Regeln der Spaltbreite unter der Streichvorrichtung.

10. Verfahren nach den Ansprüchen 1 bis 9, gekennzeichnet durch
- zusätzliches Messen der Höhe der Oberseite der unbeschichteten Trägerbahn kurz vor der Stelle, an der die geschäumte Beschichtungsmasse aufgetragen wird, durch ein berührungslos oder mit Berührung arbeitendes Entfernungsmeßverfahren, und
- Aufschalten dieser Meßwerte über einen Differenzierer als weiteren Sollwert auf die Regelung der Spaltbreite unter der Streichvorrichtung.

## Claims

1. A process for applying a foamed, flowable coating composition to an essentially horizontally running substrate web, in which the coating composition is produced in a mixing apparatus and is applied by means of an applicator in front of a spreader and the thickness of the foam layer behind the spreader can be altered, the height of the foam layer being measured by a technique working without contact and the measuring signal being used to control the thickness of the foam layer behind the spreader, characterized by
- measurement of the height of the top side of the foam using a distance-measuring technique based on the reflectance principle, at a site at which the height of the substrate web does not vary, by means of a transmitting and receiving device disposed above the substrate web.

2. A process according to claim 1, characterized by
- measurement of the height of the top side of the foam using an ultrasound or optical distance-measuring technique.

3. A process according to either of claims 1 to 2, characterized by
- measurement of the height of the top side of the foam over the transit of an ultrasound radiation or, using an optical distance-measuring technique, by means of laser radiation or electro-magnetic radiation in the visible or invisible spectral range, the radiation being transmitted and received by a transmitting and receiving device disposed in front of and/or behind the spreader.

4. A process according to any of claims 1 to 3, characterized by
- measurement of the height of the top side of the foam using a contactless distance-measuring technique,
- automatic assessment of successive measurement values for plausibility, and
- forwarding of the assessed measurement signals to one or two controllers for the purpose of controlling the thickness of the foam layer behind the spreader.

5. A process according to any of claims 1 to 4, characterized by
- control of the thickness of the foam layer behind the spreader by automatic control of the gap width below the spreader within a predefined control range in dependence upon the foam height in front of the spreader,
- or control of the thickness of the foam layer behind the spreader by superimposition of the measurement value for the foam height, as an additional target value, onto the output of the mixer supplying the foamed coating compound.

6. A process according to any of claims 1 to 5, characterized by
- triggering of an alarm signal as soon as the foam height lies outside its predefined target range.

7. A process according to any of claims 1 to 6, characterized by
- application of the coating compound by means of a traversing or a fixed apparatus, and
- measurement of the foam height in front of the spreader at 0.5 - 20 second time intervals after the traversing applicator has moved past the distance-measuring device, or
- measurement of the foam height in front of the spreader at a frequency of from 12 to 120 times per minute in the case of a fixed applicator.

8. A process according to any of claims 1 to 7, characterized by
- automatic assessment of 2 - 20 successive stored measurement values of the foam height for plausibility, and
- triggering of an alarm signal as soon as at least two successive measurement values lie outside the predefined control range of the foam height.

9. A process according to any of claims 1 to 8, the substrate web being a textile floor covering, characterized by
- measurement of the foam height of the coating compound in front of the spreader, over the transit time of a reflected ultrasound signal, by means of an ultrasound-measuring device working without contact,
- which is fitted 10 - 30 cm above the top side of the foam,
- at a time interval of respectively 2 - 8 seconds after each movement of the traversing applicator past the ultrasound-measuring device, or at a frequency of from 12 to 120 times per minute in the case of a fixed applicator,
- automatic assessment of 2 - 10 successive stored measurement values of the foam height for plausibility,
- forwarding of the assessed measurement signals to a controller,
- the control range for the foam height having a span of preferably ± 10 mm about the target value, and
- automatic control of the gap width below the spreader.

10. A process according to any of claims 1 to 9, characterized by
- additional measurement of the height of the top side of the uncoated substrate web, shortly in front of the site at which the foamed coating compound is applied, using a distance-measuring technique working with or without contact and
- superimposition of these measurement values by means of a differentiator, as an additional target value, onto the controlling of the gap width below the spreader.

## Revendications

1. Procédé pour apporter une masse d'enduction fluide, transformée en mousse, sur une nappe de support s'étendant sensiblement horizontalement, dans laquelle la masse d'enduction est préparée dans un dispositif mélangeur et est appliquée à l'aide d'un dispositif d'apport en amont d'un dispositif d'étalement, l'épaisseur de la couche de mousse derrière le dispositif d'étalement étant variable, tandis que la hauteur de la couche de mousse est mesurée par un procédé travaillant sans contact et le signal de mesure pour régler l'épaisseur de la couche de mousse derrière le dispositif d'étalement étant utilisé,
caractérisé par
- la mesure de la hauteur de la surface de mousse par un procédé de mesure télémétrique selon le principe de rémission à l'aide d'un dispositif émetteur et récepteur disposé au-dessus de la nappe de support en un point où la hauteur de la nappe de support ne varie pas.

2. Procédé selon la revendication 1,
caractérisé par
- la mesure de la hauteur de la surface de mousse par un procédé télémétrique de mesure à ultrasons ou optique.

3. Procédé selon les revendications 1 et 2,
caractérisé par
- la mesure de la hauteur de la surface de mousse sur le temps de passage d' un rayonnement à ultrsons ou par un dispositif optique de mesure télémétrique à l'aide d'un rayonnement laser ou d'un rayonnement électromagnétique dans le domaine spectral visible ou invisible, le rayonnement d'un dispositif d'émission et de réception disposé en avant et/ou derrière le dispositif d'étalement étant envoyé et reçu.

4. Procédé selon les revendications 1 à 3,
caractérisé par
- la mesure de la hauteur de la surface de mousse par un procédé sans contact de télémesure,
- l'estimation automatique de valeurs successives de mesure quant à la plausibilité, et
- la transmission des signaux de mesure estimés à un ou deux régulateurs en vue de régler l'épaisseur de la couche de mousse, derrière le dispositif d'étalement.

5. Procédé selon les revendications 1 à 4,
caractérisé par
- la régulation de l'épaisseur de la couche de mousse derrière le dispositif d'étalement, par régulation automatique de la largeur de fente sous le dispositif d'étalement à l'aide d'une zone prédéterminée de réglage en fonction de la hauteur de mousse en avant du dispositif d'étalement.
- ou par réglage de l'épaisseur de la couche de mousse derrière le dispositif d'étalement par couplage de la valeur de mesure pour la hauteur de mousse en tant qu'autres valeurs théoriques à la puissance de transport de l'appareil mélangeur fournissant la masse d'enduction transformée en mousse.

6. Procédé selon les revendications 1 à 5,
caractérisé par
- le déclenchement d'un signal d'alarme dès que la hauteur de mousse se trouve à l'extérieur de son domaine théorique prédéterminé.

7. Procédé selon les revendications 1 à 6,
caractérisé par
- l'apport de la masse d'enduction à l'aide d'un dispositif traversant ou fixe, et par
- la mesure de la hauteur de mousse en avant du dispositif d'étalement dans un intervalle de temps de 0,5 à 20 secondes après que le dispositif d'apport traversant est passé le long du dispositif de mesure de l'éloignement, ou par
- la mesure de la hauteur de mousse en avant du dispositif d'étalement à l'aide d'une fréquence de 12 à 120 fois par minute dans le cas d'un dispositif d'apport fixe.

8. Procédé selon les revendications 1 à 7,
caractérisé par
- l'estimation automatique de 2 à 20 valeurs successives emmagasinées de la hauteur de mousse quant à la plausibilité, et par
- le déclenchement d'un signal d'alarme dès qu'au moins 2 valeurs de mesure successives se trouvent à l'extérieur du domaine prescrit de réglage de la hauteur de mousse.

9. Procédé selon les revendications 1 à 8,
la nappe de support étant un revêtement de sol textile, caractérisé par
- la mesure de la hauteur de mousse de la masse d'enduction en avant du dispositif d'étalement sur la durée d'un signal rémittant ultrasonique à l'aide d'un dispositif de mesure à ultrasons travaillant sans contact,
- qui est disposé 10 à 30 cm au dessus de la surface de mousse,
- dans un intervalle de temps de 2 à 8 secondes chaque fois après chaque passage du dispositif d'apport traversant le long du dispositif de mesure à ultrasons, ou avec une fréquence de 12 à 120 fois par minute dans le cas d'un dispositif d'apport fixe,
- par l'estimation automatique de 2 à 10 valeurs successives emmagasinées de mesure de la hauteur de mousse quant à la plausibilité,
- par la transmission des signaux de mesure estimés à un régulateur, tandis que
- la zone de régulation pour la hauteur de mousse a une largeur qui, de préférence, est de ± 10 mm de part et d'autre de la valeur théorique, et
- par la régulation automatique de la largeur de fente au dessous du dispositif d'étalement.

10. Procédé selon les revendications 1 à 9,
caractérisé par
- la mesure complémentaire de la hauteur de la face supérieure de la nappe de support non enduite peu en avant du point où la masse d'enduction transformée en mousse est apportée, par un dispositif de mesures télémétriques travaillant sans contact ou avec contact, et
- par transfert de ces valeurs mesurées par un différenciateur en tant qu'autres valeurs théoriques à la régulation de la largeur de fente au dessous du dispositif d'étalement.
